# EUROPEAN PATENT APPLICATION

(11) **EP 4 293 403 A1**
(43) Date of publication of application: **20.12.2023**
(21) Application number: 23178269.9
(22) Date of filing: 08.06.2023
(51) Int. Cl.: G02B 7/02, G02B 27/00, B08B 17/06

(54) **ARTICLE AND OPTICAL APPARATUS**

(30) Priority: 16.06.2022 JP 2022097571
(71) Applicant: CANON KABUSHIKI KAISHA, Tokyo 146-8501 (JP)
(72) Inventor: SUGIYAMA, Shigeru, Tokyo, 146-8501 (JP); KOJIMA, Makoto, Tokyo, 146-8501 (JP); KUBOYAMA, Shunsuke, Tokyo, 146-8501 (JP)
(74) Representative: Canon Europe Limited

(57) **Abstract**

An article includes portions opposing each other across a gap (3), wherein a width of the gap is a width that causes a capillary action, and wherein a depression-protrusion structure (10) having a lotus effect is provided on at least one of the portions opposing each other.

## Description

### BACKGROUND OF THE INVENTION

### Field of the Invention

The present invention relates to an article and an optical apparatus.

### Description of the Related Art

Many generally used products are constituted of a plurality of members, and the members of the plurality of members are fixed to each other by being screwed or bonded. However, in the case of a movable member, a gap is sometimes provided between the movable member and an adjacent member to allow the movable member to move smoothly, and even in the case of a non-movable member, a gap may inadvertently be formed between adjacent members.

When a water droplet enters such a gap, it sometimes exerts a bad influence on the product. To avoid the bad influence, sometimes a packing made of rubber or sponge is provided in the gap. Further, Utility Model Application Laid-Open 5-64811 discusses an embodiment for reducing a permeation amount of water using an oil barrier having a water-repellent property.

However, in a case where a material having a water-repellent property is applied in a gap, there is a possibility that the water-repellent property deteriorates as the material having the water-repellent property peels off.

The present invention is directed to a technique for preventing the deterioration of the water-repellent property.

### SUMMARY OF THE INVENTION

According to a first aspect of the present invention, there is provided an article as specified in claims 1 to 14. According to a second aspect of the present invention, there is provided an optical apparatus as specified in claim 15.

Further features of the present invention will become apparent from the following description of exemplary embodiments with reference to the attached drawings.

### BRIEF DESCRIPTION OF THE DRAWINGS

Figs. 1A and 1B are diagrams respectively illustrating a state where two members are placed adjacently to each other and a state where the two members are placed separately from each other.
Fig. 2 is an enlarged view of a range surrounded by a circle A in Fig. 1A.
Figs. 3A, 3B, and 3C are perspective views each illustrating shapes of protrusion portions.
Figs. 4A and 4B are diagrams each illustrating an arrangement pattern of a depression-protrusion structure.
Figs. 5A and 5B are diagrams each schematically illustrating a state where water enters a gap.
Figs. 6A, 6B, 6C, and 6D are diagrams illustrating various depression-protrusion structures.
Fig. 7 is a graph illustrating a relationship between arrangement pitch and contact angle.
Fig. 8 is a perspective view of the depression-protrusion structure.
Fig. 9 is a diagram illustrating a manufacturing method of a mold.
Fig. 10 is a diagram illustrating a mold surface at a time when the mold surface is processed.
Fig. 11A is a photo illustrating a state where a laser processed mold surface is observed using an electron microscope, and Fig. 11B is a photo illustrating a state where a surface of a resin molded article is observed using an electron microscope.
Figs. 12A, 12B, 12C, 12D, and 12E are diagrams illustrating an injection molding process.
Fig. 13 is a diagram illustrating an imaging apparatus to which the present invention is applicable.
Fig. 14 is a cross-section diagram illustrating a lens barrel in Fig. 13.
Fig. 15 is an enlarged view of a range surrounded by a circle B in Fig. 14.
Figs. 16A and 16B are diagrams illustrating a state where the depression-protrusion structure according to a first exemplary embodiment is applied to a container.
Fig. 17 is a diagram schematically illustrating an article according to a second exemplary embodiment.
Fig. 18 is a diagram schematically illustrating a state where a large droplet impacts an article.
Fig. 19 is a diagram schematically illustrating a state where small droplets impact the article.
Figs. 20A and 20B are diagrams illustrating a depression-protrusion structure of an embodiment example.

### DESCRIPTION OF THE EMBODIMENTS

Hereinbelow, with reference to the attached drawings, exemplary embodiments of the present invention will be described. However, the exemplary embodiments described below are merely examples of the present invention, and the present invention is not limited thereto. In addition, common configurations are described with mutual reference to a plurality of drawings, and descriptions of configurations with common symbols assigned are omitted as appropriate. Different items with a same name can be discriminated by addition of "an n-th", for example, a first item or a second item.

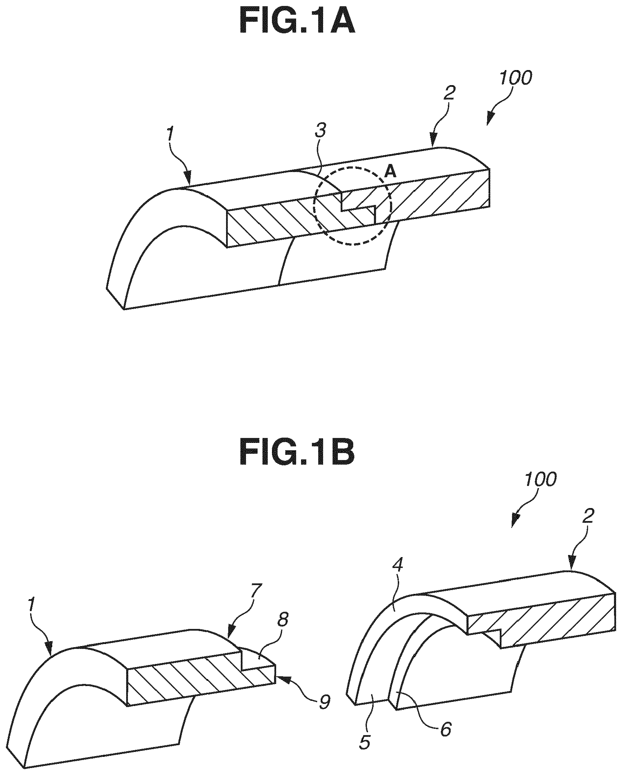

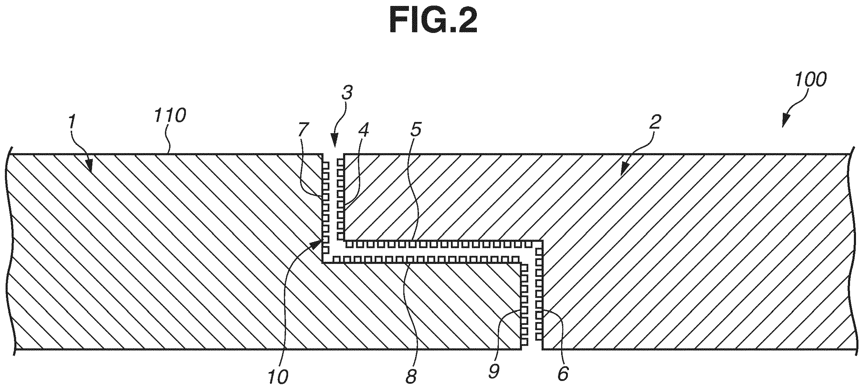

With reference to Figs. 1A, 1B, and 2, an article 100 according to a first exemplary embodiment will be described. The article 100 includes a component 1 and a component 2, and a gap 3 is provided between the component 1 and the component 2. While the gap 3 is provided between the component 1 and the component 2, the component 1 and the component 2 may contact each other at a portion other than the gap 3 and be fixed. Figs. 1A and 1B are diagrams respectively illustrating a state where the component 1 and the component 2 are arranged adjacently to each other and a state where the component 1 and the component 2 are arranged separately from each other. The component 1 and the component 2 are desirably made of a resin material, but various materials such as metal or ceramic can be used. In the present exemplary embodiment, the component 1 and the component 2 are each made of polycarbonate. The component 1 has a surface 7, a surface 8, and a surface 9 located in this order from a front surface 110 side. The component 1 and the component 2 are adjacently arranged so that a surface 4, a surface 5, and a surface 6 of the component 2 respectively oppose the surface 7, the surface 8, and the surface 9 of the component 1. For example, at least one of the component 1 and the component 2 may be a movable member to slide against each other.

Fig. 2 is an enlarged view of a range surrounded by a circle A in Fig. 1A. In Fig. 2, a depression-protrusion structure 10 is provided on each of the surface 4 to the surface 9. However, the depression-protrusion structure 10 may be provided only on each of the surface 4 and the surface 7, or may be provided only on each of the surface 6 and the surface 9. The depression-protrusion structure 10 is to be provided to at least one of the opposing surfaces. In a case where the depression-protrusion structure 10 is provided on each of the opposing surfaces, depression-protrusion structures 10 have desirably a same depression-protrusion structure. As with the gap 3 illustrated in Fig. 2, the gap 3 desirably has a bending structure to prevent intrusion of water droplets, and the surface 4 and the surface 5 are desirably non-parallel to each other. Similarly, the surface 7 and the surface 8 are desirably non-parallel to each other. Further, as illustrated in Fig. 2, if a cross section of the gap 3 has a crank shape, it is more desirable because the effect of preventing the intrusion of the water droplets becomes higher.

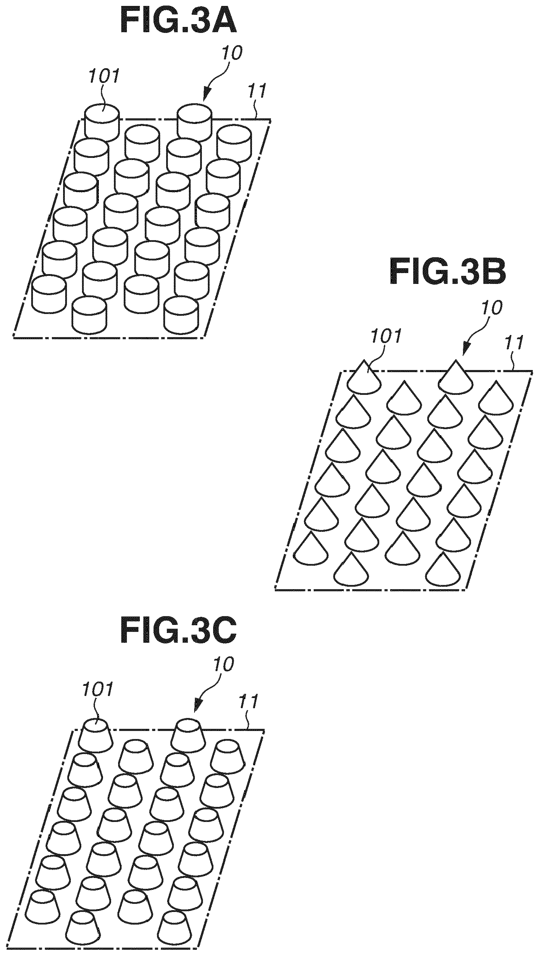

Next, with reference to Figs. 3A, 3B, and 3C, a shape of each of protrusion portions 101 in the depression-protrusion structure 10 will be described. The protrusion portions 101 are provided on a base surface 11, and any shape can be selected for each of the protrusion portions 101 from among a circular cylindrical shape illustrated in Fig. 3A, a conical shape illustrated in Fig. 3B, and a truncated cone shape illustrated in Fig. 3C. However, the depression-protrusion structure 10 only needs to have a water repellent function. Further, as the depression-protrusion structure 10, a plurality of depression portions depressed in the base surface 11 may be provided, not the protrusion portions 101 protruding from the base surface 11.

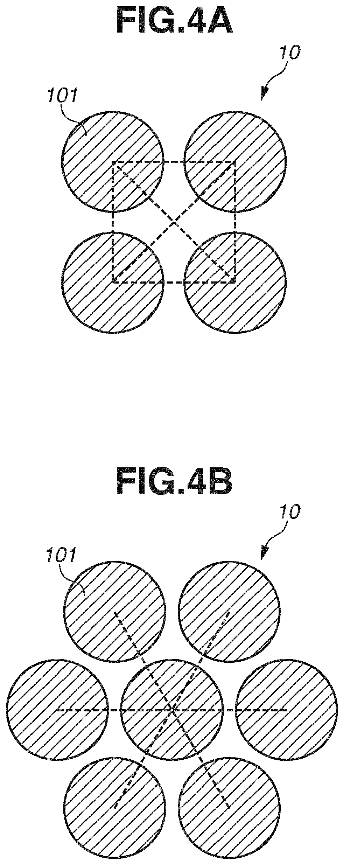

With reference to Figs. 4A and 4B, the protrusion portions 101 will be described in detail. Figs. 4A and 4B are diagrams each illustrating an extracted part of an array seen from a normal direction of the base surface 11 (refer to Figs. 3A, 3B, and 3C) to which the depression-protrusion structure 10 is provided. Fig. 4A is a diagram illustrating a pattern in which the protrusion portions 101 are arranged in a lattice-like manner, and Fig. 4B is a diagram illustrating a pattern in which the protrusion portions 101 are arranged in a honeycomb-like manner. The arrangement of the protrusion portions 101 in the depression-protrusion structure 10 may be at random, but it is desirable to arrange the protrusion portions 101 in a uniform periodic pattern as illustrated in Figs. 4A and 4B. Further, the honeycomb arrangement in Fig. 4B is more desirable to arrange the protrusion portions 101 more densely. In Figs. 4A and 4B, the configuration in which a plane (the base surface 11 illustrated in Figs. 3A, 3B, and 3C) is included between the adjacent protrusion portions 101 is described. However, in a case where the protrusion portions 101 each have the conical shape or the truncated cone shape illustrated in Fig. 3B or Fig 3C, inclined surfaces of the adjacent protrusion portions 101 may be adjacently arranged with a linear boundary (valley portion) therebetween. In this case, the base surface 11 illustrated in each of Figs. 3A, 3B and 3C becomes a virtual plane including a continuous valley portion in the surface. As for the arrangement described above, various arrangements can be similarly applied to a case where the depression-protrusion structure 10 including a plurality of depression portions depressed in the base surface 11 is employed.

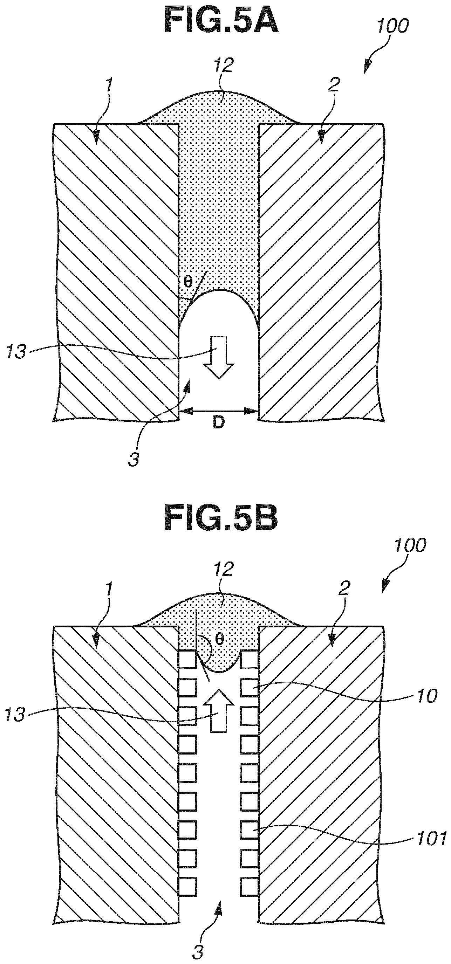

Next, the effect of preventing the intrusion of water in the gap 3 with the depression-protrusion structure 10 will be described. First, with reference to Fig. 5A, a description will be given of a water intrusion state when water drops into the gap 3 in a state where the depression-protrusion structure 10 is not provided therein. When water 12 drops into the gap 3, a contact angle θ generated due to the surface tension of the water 12 is generally smaller than 90° when the components 1 and 2 are made of general resin materials. Thus, since a force 13, generated in the gap 3 due to a capillary action, is generated in a direction to allow the water 12 to enter the gap 3 (downward in Fig. 5A), the gap 3 allows the water 12 to enter the gap 3.

Next, with reference to Fig. 5B, a description will be given of the effect of preventing the intrusion of water into the gap 3 by the depression-protrusion structure 10 of the article 100 according to the present exemplary embodiment. When the water 12 drops into the gap 3, a contact area between the water 12 and each of the component 1 and the component 2 reduces due to the depression-protrusion structure 10. As illustrated in Fig. 5B, in the case of the article 100 according to the present exemplary embodiment made of polycarbonate, the contact angle θ becomes larger than 90° because the contact area becomes smaller. When the contact angle θ becomes larger than 90°, since the force 13 generated in the gap 3 is generated in a direction (upward in Fig. 5B) to prevent the intrusion of the water 12, it is possible to prevent the water 12 from entering the gap 3 without using an object such as a packing.

Further, since the deterioration of the depression-protrusion structure 10 caused by being used over time is less than the deterioration when a water repellent material such as lubricant oil is used, it is possible to prevent the decrease of the water-repellent function. The action of adjusting the surface free energy of a component by the depression-protrusion structure to cause the water-repellent function in this way is referred to as a lotus effect. A width D of the gap 3 for which the water-repellent function is necessary is a width that causes the capillary action, which is 0.05 mm or more and 2 mm or less. In addition, in a case where the width D of the gap 3 is 0.1 mm or more and 1 mm or less, it is more suitable for using the configuration according to the present exemplary embodiment. In Fig. 5A, the width D is a distance between the base surface 11 and a surface opposing the base surface 11. However, the width D of the gap 3 is not specifically limited to a certain width, and the configuration according to the present exemplary embodiment can be used for all arrangements in which the width is enough to cause the capillary action.

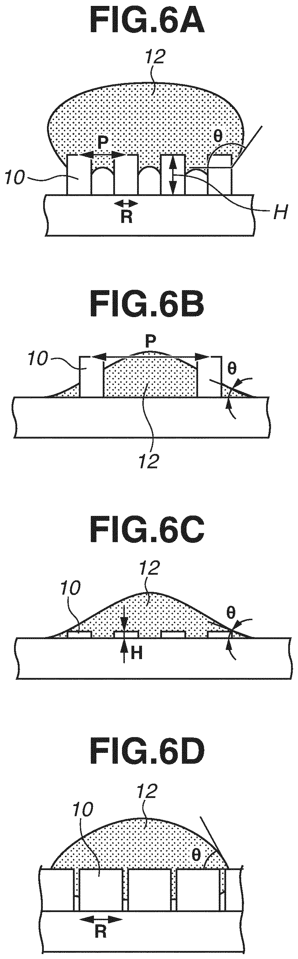

Next, with reference to Figs. 6A to 6D, 7, and 8, the shape of the depression-protrusion structure 10 will be described. As illustrated in Fig. 6A, a good water-repellent state can be achieved by the depression-protrusion structure 10 and air supporting the water 12 to increase the apparent contact angle θ due to the surface tension of the water 12. First, an arrangement pitch (or pitch) P in the depression-protrusion structure 10 will be described with reference to Fig. 6B.

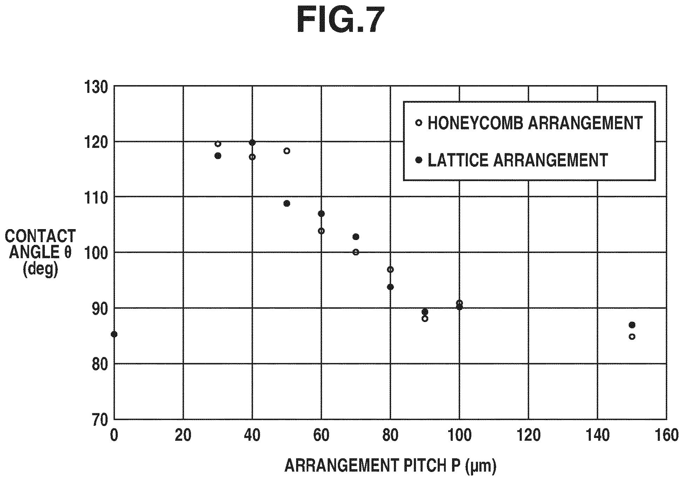

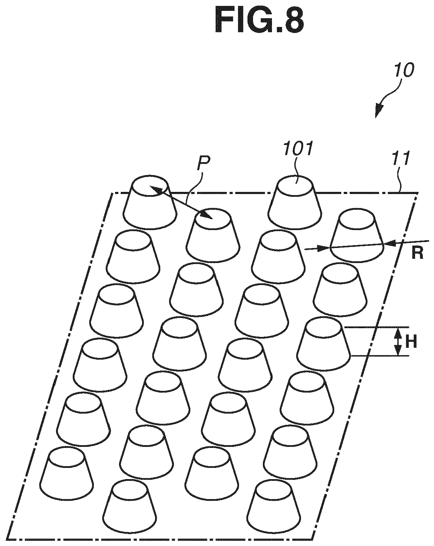

In a case where the arrangement pitch P is excessively large, since the depression-protrusion structure 10 cannot support the water 12 and the water 12 contacts the base surface 11, the contact angle θ becomes small, so that the water-repellent state cannot be achieved. Fig. 7 is a graph illustrating a relationship, obtained by an experiment, between the arrangement pitch P between the protrusion portions 101 and the contact angle θ in the depression-protrusion structure 10. In in the depression-protrusion structure 10, the protrusion portions 101 each with a width R (40 µm) and a height H (30 µm) are formed on the surface of the component made of polycarbonate resin illustrated in Fig. 8. As for the arrangement, the measurement was performed using two types of arrangement, namely the honeycomb arrangement and a lattice arrangement. As the arrangement pitch P became larger, the contact angle θ became smaller, and it can be seen that the contact angle θ did not change from that of a flat surface when the arrangement pitch P became larger than 90 µm. In addition, in Fig. 7, the contact angle θ in the case of the flat surface with no protrusion portions 101 being provided was set as a point of the arrangement pitch P being 0.

The arrangement pitch P in the depression-protrusion structure 10 is desirably 10 µm or more and 80 µm or less, and more desirably 70 µm or less. If the arrangement pitch P in the depression-protrusion structure 10 is 70 µm or less, as illustrated in Fig. 7, the contact angle θ can be made to be 100° or more. In Fig. 7, the arrangement pitch P is a distance between centers of a certain protrusion portion and a protrusion portion adjacent thereto. The arrangement pitch P between the depression portions is defined in a similar manner to that of the protrusion portion.

In the article 100 according to the present exemplary embodiment, to obtain the effect of preventing water from entering the gap 3, the contact angle θ is desirably 90° or more, and is more desirably 100° or more. However, the shape of the depression-protrusion structure 10 is not specifically limited to a certain shape, and the depression-protrusion structure 10 only needs to have a lotus effect.

Next, a case where the lattice arrangement is employed and a case where the honeycomb arrangement is employed will be compared. In Fig. 7, focusing on data near the contact angle θ being 120° and the arrangement pitch P being 50 µm, it can be seen that the honeycomb arrangement can keep a larger contact angle θ at a larger arrangement pitch P. As illustrated in Fig. 4A, it can be seen that the arrangement pitch P in the depression-protrusion structure 10 in the lattice arrangement is large in a diagonal direction. For this reason, in the case of the lattice arrangement, the water contacts the base surface 11 as illustrated in Fig. 6B due to the arrangement pitch P being large in the diagonal direction, and the contact angle θ becomes small, so that a water repellent effect is smaller than the case of the honeycomb arrangement. On the other hand, as illustrated in Fig. 4B, it can be seen that the arrangement pitch P in the depression-protrusion structure 10 in the honeycomb arrangement is constant at any point. Since the water repellent effect is large in the case of the honeycomb arrangement compared with the case of the lattice arrangement, the arrangement pattern preferably is the honeycomb arrangement. However, the protrusion portions 101 in the depression-protrusion structure 10 can be arranged at random not limited to the lattice arrangement or the honeycomb arrangement.

Next, with reference to Figs. 6A to 6D, the height H of each of the protrusion portions 101 in the depression-protrusion structure 10 will be described. As illustrated in Fig. 6A, in a case where the height H of each of the protrusion portions 101 is high enough, since air between the protrusion portions 101 can support the water, the apparent contact angle θ generated due to the surface tension of the water can be increased. On the other hand, as illustrated in Fig. 6C, in a case where the height H of each of the protrusion portions 101 is low, the water contacts the base surface 11, so that the contact angle θ becomes small, and it is difficult to achieve the water-repellent state. To achieve the water-repellent state, the height H of each of the protrusion portions 101 is desirably 1 µm or more, and more desirably 10 µm or more. The maximum value of the height H is desirably a half of the width D of the gap 3 or less. The height H is desirably, for example, 150 µm or less, and more desirably 100 µm or less. The depth of each of depression portions when the depression portions are provided on the base surface 11 is a depth from the base surface 11, and is desirably in a range similar to the height of each of the protrusion portions.

Next, with reference to Figs. 6A to 6D, the width R of each of the protrusion portions 101 in the depression-protrusion structure 10 will be described. As illustrated in Fig. 6D, in a case where the width R of each of the protrusion portions 101 is large, the surface area of each of the protrusion portions 101 increases. As a result, the ratio of supporting the water by the air becomes smaller, and the apparent contact angle θ caused by the surface tension becomes smaller. To achieve the water-repellent state, the width R of each of the protrusion portions 101 is desirably 100 µm or less, and more desirably 60 µm or less. The width R of each of the protrusion portions 101 is desirably 10 µm or more, and more desirably 30 µm or more. The width of each of the depression portions is desirably in the range similar to that of each of the protrusion portions 101. The width R in each of Figs. 3B and 3C is a width at a largest portion in each of the protrusion portions 101, and similar thereto, the width of the depression portion is a width at a largest portion in each of the depression portions.

Next, a manufacturing method of manufacturing the article 100 according to the present exemplary embodiment will be described. In the present exemplary embodiment, a manufacturing method by injection molding using a mold is described, but the method is not limited to the injection molding. First, a manufacturing method of a mold 16 will be described. Examples of the manufacturing method of the mold 16 include a method of manufacturing a molded article to which a depression-protrusion structure is provided by transferring, to resin, recessed portions formed by a cutting operation, and a method of manufacturing a molded article to which a depression-protrusion structure is provided by transferring, to resin, recessed portions formed by a laser operation. In the present exemplary embodiment, the method of manufacturing the molded article by transferring, to the resin, the recessed portions formed by the laser operation will be described.

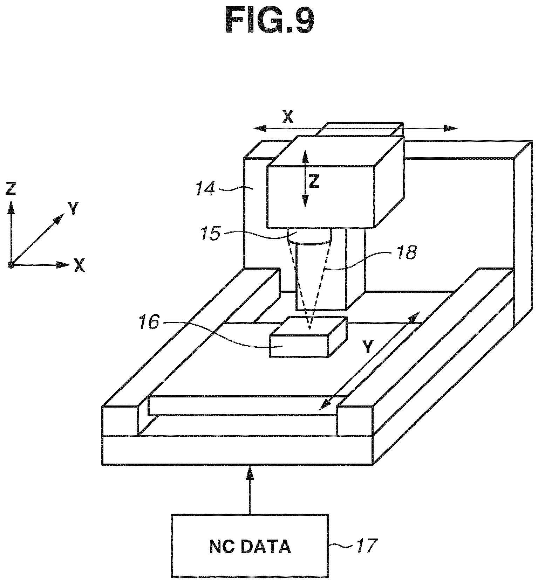

Fig. 9 illustrates a configuration example of a laser processing machine 14 as an apparatus for processing the mold 16. In this example, a laser head 15 of the laser processing machine 14 is configured to be movable in three axial directions including a linear axis X, a linear axis Y, and a linear axis Z. Further, the laser head 15 includes a galvanometer mirror (not illustrated) therein. Depending on the laser processing machine, some of the laser processing machines are configured to be able to move the laser head 15 in more directions, and such types of laser processing machine may be used. The laser head 15 is moved by a driving unit (not illustrated) based on a moving amount in each axial direction described in numerical control (NC) data 17. On the other hand, the laser head 15 emits a laser beam 18 according to the NC data 17, and scans the mold 16 with the laser beam 18 using the galvanometer mirror. In this way, the laser head 15 can process the mold 16 in any shape.

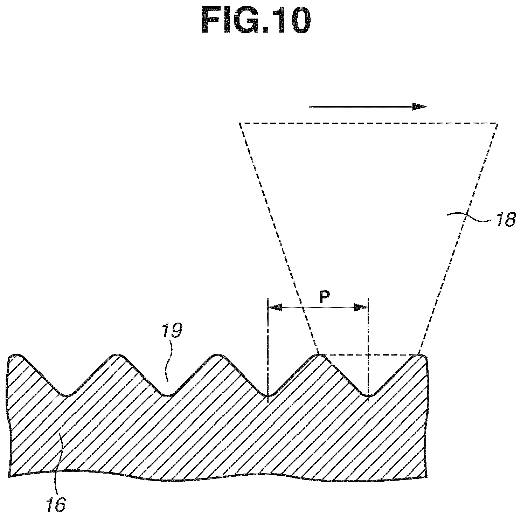

Fig. 10 is an enlarged view illustrating a state of processing performed on a surface of the mold 16 by the laser processing machine 14. Fig. 10 illustrates the surface of the mold 16 seen from a cross-section direction. The mold 16 can take various shapes such as a plane and a complicated curved surface corresponding to a shape of a molded article. Accordingly, the base surface seen from the cross-section direction is not always linear, but in Fig. 10, a case where the base surface seen from the cross-section direction is linear is illustrated as an example. The laser beam 18 is emitted from the laser head 15 to form a processed hole 19 for each pulse. For example, infrared light with a wavelength of 1,064 nm is used as the laser beam 18, and as for a pulse width, a femtosecond laser can be used, but other lasers may be used.

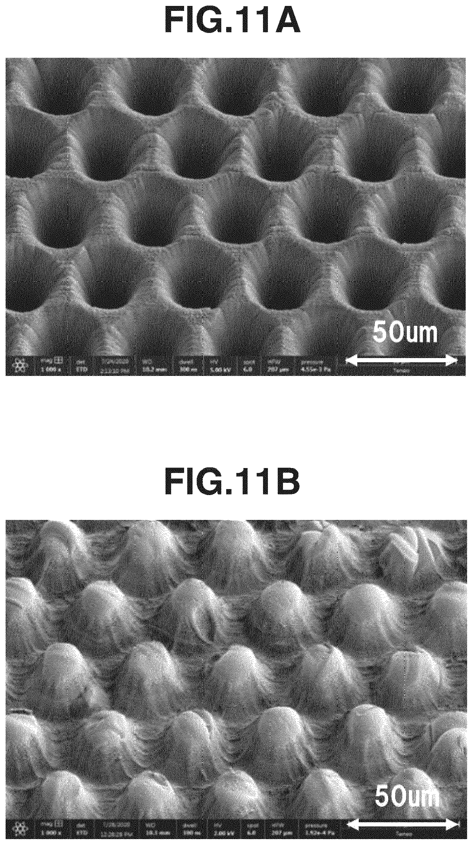

As illustrated in Fig. 10, the laser processing machine 14 radiates the laser beam 18 to the mold 16 to form a plurality of the processed holes 19 while repeatedly moving the laser beam 18 for a distance corresponding to the arrangement pitch P in the depression-protrusion structure 10 by the galvanometer mirror. Fig. 11A is a photo illustrating a surface of the mold 16 after being laser processed observed using an electron microscope. It can be seen that an arrangement pattern of the processed holes 19 is formed in the honeycomb arrangement.

Through these processes, the mold 16 for molding can be obtained.

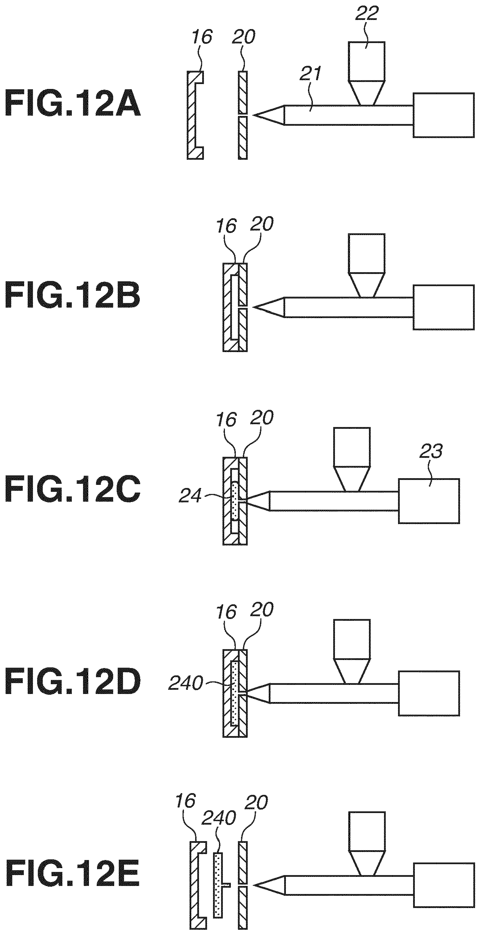

Next, an injection molding process will be described. Figs. 12A to 12E are diagrams schematically illustrating the injection molding process for manufacturing the article 100 according to the present exemplary embodiment. A generally used injection molding machine can be used as the injection molding machine. Resin is injected by a cylinder 21 with a cylindrical shape into a space formed by the mold 16 and a mold 20 illustrated in Fig. 12A. On the other hand, a hopper 22 inputs a resin material into the cylinder 21. A thermoplastic material such as polystyrene, polycarbonate, and polypropylene can be used as the resin material. Further, a resin material colored with a coloring agent such as a pigment mixed therein may be used. The cylinder 21 includes a screw (not illustrated) therein, and the resin material in the hopper 22 is sent to a tip of the cylinder 21 by the screw rotated by a motor (not illustrated). Further, the cylinder 21 includes a heater (not illustrated), and the resin material input from the hopper 22 is heated to a temperature higher than a glass transition temperature of the resin material while being sent to the tip of the cylinder 21 through the inside of the cylinder 21, and melts to a liquid state. Then, the resin material is accumulated in a space at the tip of the cylinder 21.

The process in Fig. 12B is referred to as a mold clamping process, and the molds 16 and 20 are fitted with each other by a mechanism (not illustrated). Further, the molds 16 and 20 are heated by a heater (not illustrated). The heating temperature of the molds 16 and 20 in this process is referred to as a mold temperature.

Then, the process in Fig. 12C is referred to as an injection process, and the cylinder 21 is pressed to an injection hole portion provided in the mold 20. Further, an oil hydraulic cylinder portion 23 operates to push the screw (not illustrated) in a direction of the tip of the cylinder 21, so that a melted resin 24 is injected into a space inside the molds 16 and 20 fitted together. The temperature of the melted resin 24 in this process is referred to as a resin temperature.

Fig. 12D illustrates processes referred to as a pressure keeping process and a cooling process. In the pressure keeping process, the pressure in the cylinder 21 is controlled to keep the pressure of the melted resin 24 in the space formed by the molds 16 and 20 to be a desired pressure. The pressure is referred to as a keeping pressure. A pressure that can spread the resin 24 throughout the space in the molds 16 and 20 is selected as the keeping pressure. In the cooling process subsequent to the pressure keeping process, the molds 16 and 20 in Fig. 12D is cooled by a cooling mechanism (not illustrated). In this way, the resin 24 in the molds 16 and 20 is cooled down to a temperature lower than the glass transition temperature to form a resin-molded article 240. Examples of the cooling mechanism include a means that circulates cooling water around the mold 16.

Next, Fig. 12E illustrates processes referred to as a mold opening process and a mold releasing process. The molds 16 and 20 are opened by a mechanism (not illustrated). Next, the resin-molded article 240 is taken out from the molds 16 and 20 by a mold release mechanism (not illustrated). In general, at a stage at which the molds 16 and 20 are opened, the resin-molded article 240 is in a state of sticking to surfaces of the molds 16 and 20. The mold release mechanism performs an operation of pushing out the resin-molded article 240 sticking to the surfaces of the molds 16 and 20 therefrom with a bar called an ejector pin that penetrates through the mold 20. Fig. 11B is a photo illustrating a surface of the taken out resin-molded article 240 observed using an electron microscope. In Fig. 11B, it can be recognized that fine shape objects in the honeycomb arrangement formed by the mold shape in Fig. 11A being transferred thereto are formed on the resin-molded article 240. Through these processes, the resin-molded article 240 can be obtained.

Next, a case where the depression-protrusion structure 10 according to the present exemplary embodiment is applied to an imaging apparatus 200 will be described. However, the present exemplary embodiment is not limited to the application only to the imaging apparatus 200, and can be applied to various molded articles for printers, speakers, and other products.

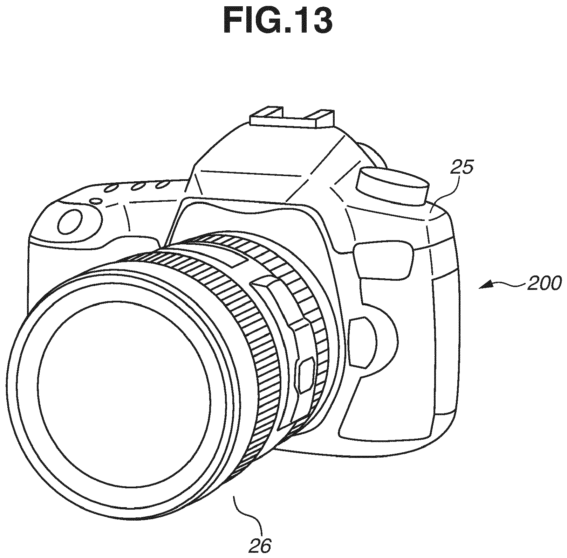

Fig. 13 is a diagram schematically illustrating a digital camera, which is an example of the imaging apparatus 200 to which the present exemplary embodiment is applicable. The imaging apparatus 200 includes a main body 25 and a lens barrel 26 that is attachable to and detachable from the main body 25. The lens barrel 26 includes a plurality of components which are formed to be unified by being screwed, bonded, or fitted with each other. Then, joint parts and gaps generally exist between components on the surface of the lens barrel 26. Then, a case where the present exemplary embodiment is applied to the lens barrel 26 will be described.

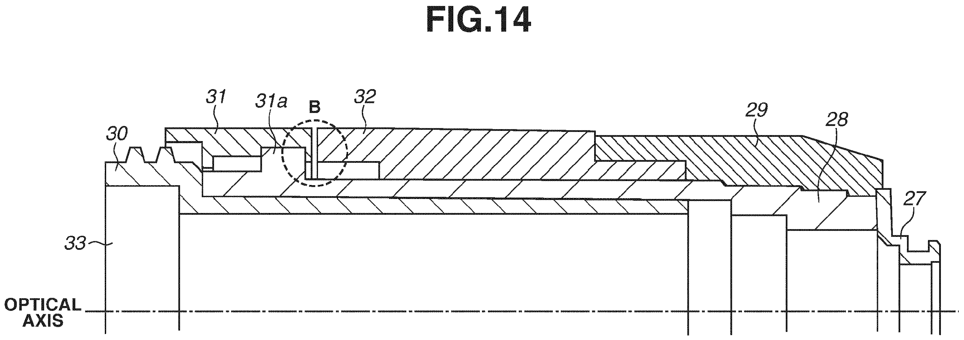

Fig. 14 is a cross-section diagram of the lens barrel 26 illustrated in Fig. 13. The lens barrel 26 is an optical apparatus including a lens 33, and a lens mount 27 holds the lens barrel 26 to the main body 25 in a detachable manner. A fixed barrel 28 holds an operation member (operation ring) of the lens barrel 26. The lens mount 27 is integrally held by the fixed barrel 28 with screws or the like. An exterior ring 29 is an outer appearance part of the lens barrel 26, and also covers and protects an internal mechanism of the lens barrel 26. The exterior ring 29 is integrally held by the operation ring 32 and the fixed barrel 28 using screws or the like.

Not illustrated knurled grooves (depression-protrusion portion) are formed on an outer circumferential surface of the operation ring 32 to enable a user to rotate the operation ring 32 easily. An operation ring 31 engages with an engaging portion of the fixed barrel 28 at an engaging portion 31a. A front ring 30 is fixed to the fixed barrel 28 by bonding or the like.

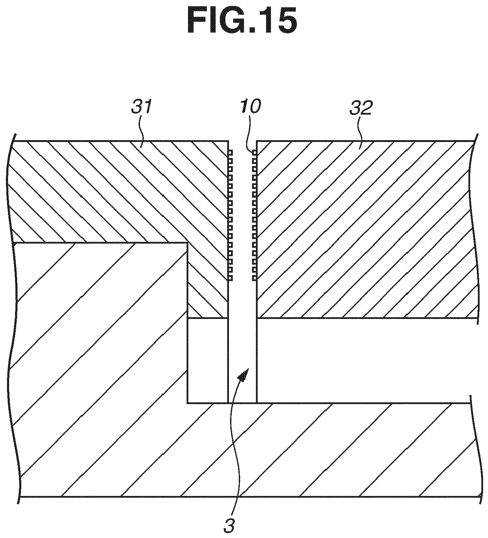

Fig. 15 is an enlarged view of a range surrounded by a circle B in Fig. 14, and the gap 3 is provided between the operation ring 31 and the operation ring 32. The depression-protrusion structure 10 is formed on each of the operation ring 32 facing side of the operation ring 31 and the operation ring 31 facing side of the operation ring 32. As illustrated in Fig. 15, it is possible to prevent water from entering the inside of the imaging apparatus 200 by the depression-protrusion structures 10 provided on the lens barrel 26.

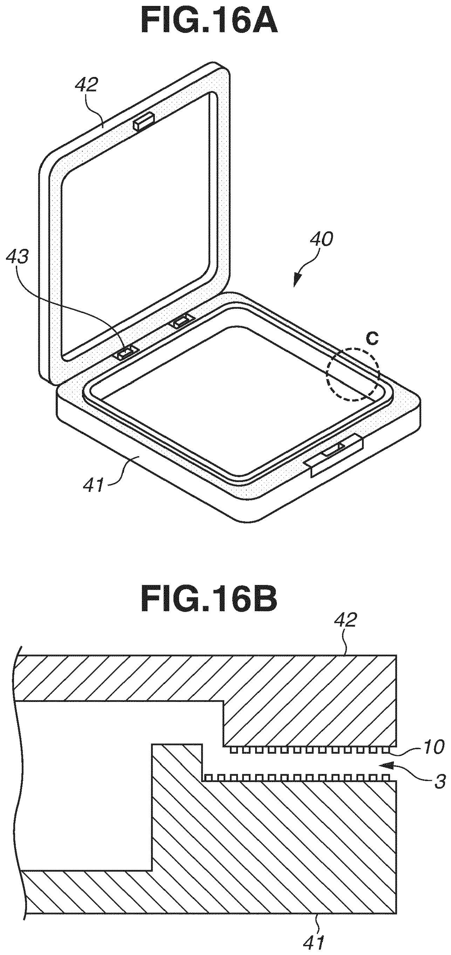

With reference to Figs. 16A and 16B, a case where the depression-protrusion structure 10 according to the present exemplary embodiment is applied to a container 40 will be described. The container 40 includes a main body 41 and a cover 42, and the main body 41 and the cover 42 are connected with a hinge 43 so that opening and closing operations thereof can be easily performed.

Fig. 16B is an enlarged view illustrating a range surrounded by a circle C when the cover 42 of the container 40 in Fig. 16A is closed. The container 40 has the gap 3 between the main body 41 and the cover 42. The depression-protrusion structure 10 is provided on each of the cover 42 side of the main body 41 and the main body 41 side of the cover 42. With this configuration, it is possible to prevent water from entering the inside of the container 40 when the cover 42 is closed. The container 40 is suitable for a storage container for storing a product that should avoid contact with moisture, for example, cosmetics, medicinal drugs, and paper.

It is possible to apply a water repellent agent to each surface on which the depression-protrusion structure 10 is provided to provide the article 100 with a higher water repellent effect.

Note the arrangement pitch P, the height H, and the width R of the protrusion portions 101 in the depression-protrusion structure 10 do not have to be uniform.

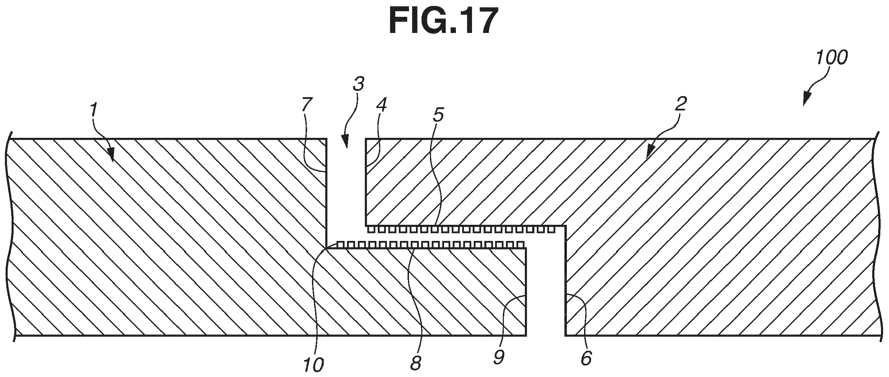

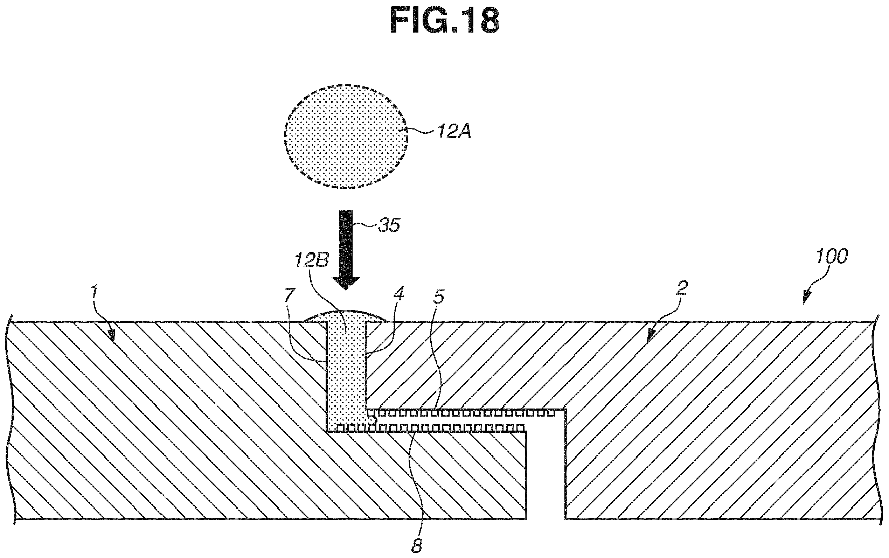

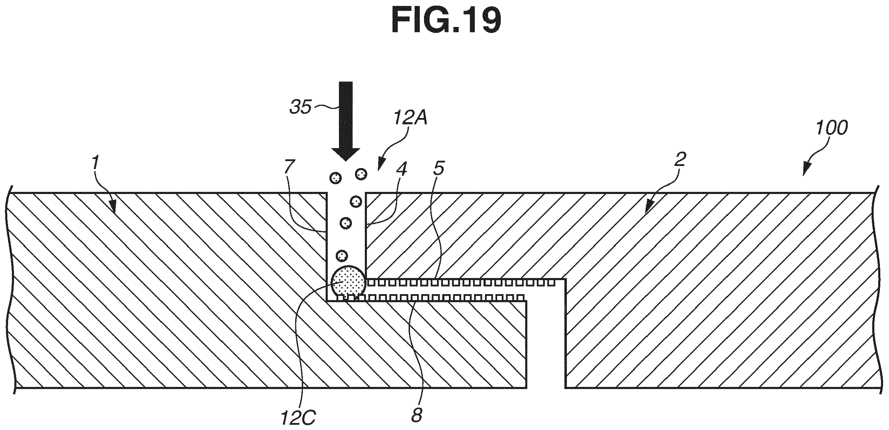

With reference to Figs. 17, 18, and 19, an article 100 according to a second exemplary embodiment will be described. Fig. 17 is a diagram schematically illustrating the article 100 according to the present exemplary embodiment. Fig. 18 is a diagram schematically illustrating a state where a large water droplet 12A impacts the article 100. Fig. 19 is a diagram schematically illustrating a state where a small water droplet 12A impacts the article 100.

The article 100 according to the present exemplary embodiment is different from the article 100 according to the first exemplary embodiment in that the depression-protrusion structure 10 is not provided on the surface 4, the surface 6, the surface 7, and the surface 9, and the depression-protrusion structure 10 is provided on each of the surface 5 and the surface 8 that are non-parallel to the surface 4, the surface 6, the surface 7, and the surface 9. In this case, each of the surfaces on which the depression-protrusion structure 10 is not provided only needs to be flatter than each of the surfaces on which the depression-protrusion structure 10 is provided and does not need to be absolutely flat. Each of the surface 7 and the surface 9 is, for example, a first portion of the component 1, and the surface 8 is, for example, a second portion of the component 1. On the other hand, each of the surface 4 and the surface 6 is, for example, a first portion of the component 2, and the surface 5 is, for example, a second portion of the component 2.

With reference to Figs. 18 and 19, an advantage of the article 100 according to the present exemplary embodiment will be described. The water droplet 12A in Fig. 18 is a droplet before impacting the article 100, and a water droplet 12B is a droplet after impacting the article 100. The water droplet 12A has a kinetic energy in a direction of an arrow 35, and impacts the article 100 in a state of having the kinetic energy. Even if the depression-protrusion structure 10 is provided on the surface 4 or the surface 7, it is difficult to repel the water droplet 12A because the depression-protrusion structure 10 cannot withstand the kinetic energy. However, the water droplet 12B that has lost the kinetic energy due to impacting the article 100 does not have a large kinetic energy in a direction that is non-parallel to the direction of the arrow 35. Thus, it is possible to efficiently prevent the water droplet 12B from entering the article 100 by the depression-protrusion structure 10 provided only on the surface 5 or the surface 8.

With reference to Fig. 19, a case where a relatively small droplet crashes against the article 100 will be described. In a case where water droplets 12A enter the gap 3 of the article 100, if the depression-protrusion structure 10 is provided on the surface 5 or the surface 8, the water droplets 12A can be accumulated on a surface of the depression-protrusion structure 10 as a droplet 12C. Since the droplet 12C is accumulated, the droplet 12C plays a role of a stopper for other droplets to prevent the droplets from entering the gap 3 anymore.

In a case where the component 1 and the component 2 are manufactured by the injection molding, if the depression-protrusion structure 10 is to be provided on each of all the surfaces 4 to 9, shape cutout of one of the non-parallel surfaces is difficult, and the depression-protrusion structure 10 cannot be transferred successfully. In particular, in the case where the depression-protrusion structure 10 is applied to the lens barrel 26 as illustrated in Fig. 14, since a direction of the shape cutout is perpendicular to the optical axis, it is desirable to provide the depression-protrusion structure 10 on the surface 5 or the surface 8 in Fig. 2.

As described above, it is possible to achieve a sufficient water repellent effect by the depression-protrusion structure 10 provided at least on the surface 5 or the surface 8, and it is also possible to reduce costs compared with a case where the depression-protrusion structure 10 is provided on each of all the surfaces 4 to 9.

### <Embodiment Example>

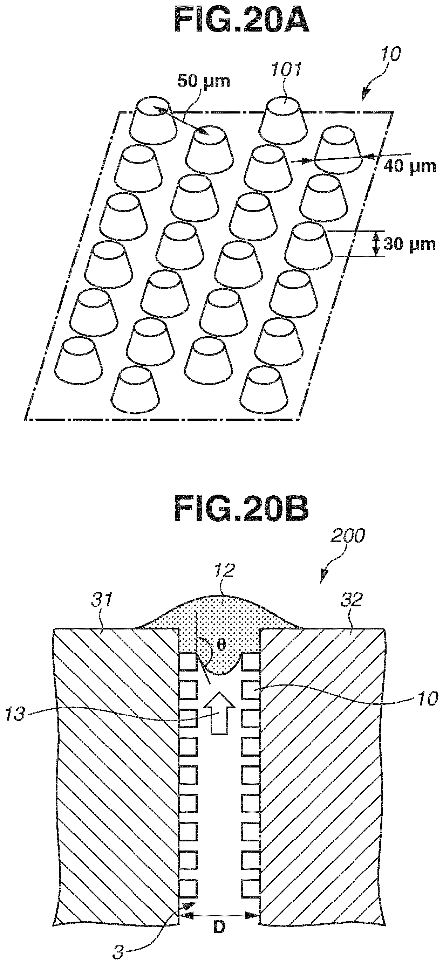

With reference to Figs. 20A and 20B, an embodiment example according to the present invention will be described. Fig. 20A is an enlarged view of the depression-protrusion structure 10 described according to the first exemplary embodiment. On the other hand, Fig. 20B is a partial cross-section diagram illustrating an example in which the depression-protrusion structure 10 is formed on each of the operation ring 31 and the operation ring 32 of the imaging apparatus 200 described with reference to Figs. 13 and 14. In the present embodiment example, the arrangement pitch P is 50 µm, the height H is 30 µm, the width R is 40 µm, and the width D of the gap is 0.2 mm, and the protrusion portions 101 each have a truncated cone shape and are arranged in the honeycomb arrangement. The operation ring 31 and the operation ring 32 are made of resin such as polycarbonate, and the depression-protrusion structure 10 is formed by the injection molding.

With reference to Fig. 20B, a case where the water 12 attaches to the surface of the imaging apparatus 200 according to the present embodiment example will be described. If the water 12 drops on the gap 3, since the contact angle θ is larger than 90° due to the depression-protrusion structures 10, the force 13 generated in the gap 3 is in a direction to prevent the intrusion of the water 12. Thus, a water droplet can be prevented only using the depression-protrusion structures 10 without using an object such as a packing.

The disclosure contents according to the present invention will be described below.

(Configuration 1) An article includes portions opposing each other across a gap, wherein a width of the gap is a width that causes a capillary action, and wherein a depression-protrusion structure having a lotus effect is provided on at least one of the portions opposing each other.

(Configuration 2) In the article according to Configuration 1, the width of the gap is 0.05 mm or more and 2 mm or less.

(Configuration 3) In the article according to Configuration 1 or 2, a pitch between protrusion portions in the depression-protrusion structure or a pitch between depression portions in the depression-protrusion structure is 70 µm or less.

(Configuration 4) In the article according to Configuration 3, a height of at least one of the protrusion portions or a depth of at least one of the depression portions is 1 µm or more, and a width of at least one of the protrusion portions or a width of at least one of the depression portions is 100 µm or less.

(Configuration 5) An article includes portions opposing each other across a gap, wherein a depression-protrusion structure is provided on at least one of the portions opposing each other, wherein a pitch between protrusion portions in the depression-protrusion structure or a pitch between depression portions in the depression-protrusion structure is 70 µm or less, wherein a height of at least one of the protrusion portions or a depth of at least one of the depression portions is 1 µm or more, wherein a width of at least one of the protrusion portions or a width of at least one of the depression portions is 100 µm or less, and wherein a width of the gap is 0.05 mm or more and 2 mm or less.

(Configuration 6) The article according to any one of Configurations 1 to 5, further includes a first component and a second component opposing the first component, wherein one of the portions opposing each other is provided on a surface of the first component opposing the second component, and wherein the other of the portions opposing each other is provided on a surface of the second component opposing the first component.

(Configuration 7) An article includes a first component, a second component opposing the first component, and a gap provided between the first component and the second component, wherein a depression-protrusion structure is provided on a surface of the first component opposing the second component, wherein a pitch between protrusion portions in the depression-protrusion structure or a pitch between depression portions in the depression-protrusion structure is 70 µm or less, wherein a height of at least one of the protrusion portions or a depth of at least one of the depression portions is 1 µm or more, wherein a width of at least one of the protrusion portions or a width of at least one of the depression portions is 100 µm or less, and wherein a width of the gap is 0.05 mm or more and 2 mm or less.

(Configuration 8) An article includes a first component, a second component opposing the first component, and a gap provided between the first component and the second component, wherein a width of the gap is a width that causes a capillary action, and wherein a depression-protrusion structure having a lotus effect is provided on a surface of the first component opposing the second component.

(Configuration 9) In the article according to any one of Configurations 6 to 8, the surface of the first component opposing the second component includes a first portion and a second portion, wherein the first portion is non-parallel to the second portion, and wherein the depression-protrusion structure is not provided on the first portion, and the depression-protrusion structure is provided on the second portion.

(Configuration 10) In the article according to Configuration 10, the first portion is located on a surface side of the article with respect to the second portion.

(Configuration 11) In the article according to any one of Configurations 6 to 10, a same depression-protrusion structure as the depression-protrusion structure provided on the first component is provided on a surface of the second component opposing the first component.

(Configuration 12) In the article according to any one of Configurations 1 to 11, the protrusion portions or the depression portions in the depression-protrusion structure are arranged in a honeycomb arrangement.

(Configuration 13) In the article according to Configuration 12, the protrusion portions or the depression portions each have a circular cylindrical shape, a conical shape, or a truncated cone shape.

(Configuration 14) In the article according to any one of Configurations 1 to 13, the article is formed of a material including resin.

(Configuration 15) In the article according to Configuration 15, the resin includes at least one of polycarbonate, polystyrene, and polypropylene.

(Configuration 16) In the article according to any one of Configurations 1 to 15, a contact angle of the depression-protrusion structure is 100° or more.

(Apparatus 1) An optical apparatus includes the article according to any one of Configurations 1 to 16, and a lens.

The exemplary embodiments described above can be appropriately changed in a range without departing from the scope of the technological thought. For example, the plurality of exemplary embodiments can be combined. Further, part of the components of at least one exemplary embodiment can be eliminated or replaced.

Further, a new component can be added to at least one exemplary embodiment. The disclosed contents of the present specification include not only the contents explicitly described in the present specification, but also all the contents understandable from the present specification and the drawings attached to the present specification.

Further, the disclosed contents of the present specification include a complementary set of the individual concepts described in the present specification. More specifically, if, for example, there is a description of a case where "A is larger than B" in the present specification, and even if a description of a case where "A is not larger than B" is omitted, it should be understood that the present specification also discloses the case where "A is not larger than B". It is because if the case where "A is larger than B" is described, the case where "A is not larger than B" is taken into consideration, as a premise.

The present invention can provide an advantageous technique for preventing the deterioration of the water-repellent property.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An article comprising portions opposing each other across a gap,
wherein a width of the gap is a width that causes a capillary action, and
wherein a depression-protrusion structure having a lotus effect is provided on at least one of the portions opposing each other.

2. The article according to claim 1, wherein the width of the gap is 0.05 mm or more and 2 mm or less.

3. The article according to claim 1 or 2, wherein a pitch between protrusion portions in the depression-protrusion structure or a pitch between depression portions in the depression-protrusion structure is 70 µm or less.

4. The article according to claim 3, wherein a height of at least one of the protrusion portions or a depth of at least one of the depression portions is 1 µm or more, and a width of at least one of the protrusion portions or a width of at least one of the depression portions is 100 µm or less.

5. The article according to any one of claims 1 to 4, further comprising a first component and a second component opposing the first component,
wherein one of the portions opposing each other is provided on a surface of the first component opposing the second component, and
wherein the other of the portions opposing each other is provided on a surface of the second component opposing the first component.

6. The article according to any one of claims 1 to 5, further comprising a first portion on which the depression-protrusion structure is provided, and a second portion on which the depression-protrusion structure is not provided,
wherein the first portion is non-parallel to the second portion.

7. The article according to claim 6, wherein the first portion is located on a front surface side of the article with respect to the second portion.

8. The article according to claim 5, wherein a same depression-protrusion structure as the depression-protrusion structure provided on the first component is provided on a surface of the second component opposing the first component.

9. The article according to any one of claims 1 to 5, wherein the protrusion portions or the depression portions in the depression-protrusion structure are arranged in a honeycomb arrangement.

10. The article according to any one of claims 1 to 9, wherein the protrusion portions or the depression portions in the depression-protrusion structure each have a circular cylindrical shape, a conical shape, or a truncated cone shape.

11. The article according to any one of claims 1 to 10, wherein the article is formed of a material including resin.

12. The article according to claim 11, wherein the resin includes at least one of polycarbonate, polystyrene, and polypropylene.

13. The article according to any one of claims 1 to 12, wherein a contact angle of the depression-protrusion structure is 100° or more.

14. The article according to any one of claims 1 to 13, wherein the portions slide against each other each on a portion on which the depression-protrusion structure is not provided.

15. An optical apparatus comprising:
the article according to any one of claims 1 to 14; and
a lens.
